# EUROPÄISCHE PATENTSCHRIFT

(11) **EP 3 431 855 B1**
(45) Veröffentlichungstag und Bekanntmachung des Hinweises auf die Patenterteilung: **16.12.2020**
(21) Anmeldenummer: 18176665.0
(22) Anmeldetag: 08.06.2018
(51) Int. Cl.: F16L 53/38, F16L 25/01, F16L 37/12, F16L 41/02

(54) **SCR-VERBINDUNGSSTELLE**
SCR CONNECTION POINT
POINT DE RACCORDEMENT RCS

(30) Priorität: 21.07.2017 DE 202017104371 U
(43) Veröffentlichungstag der Anmeldung: 23.01.2019
(73) Patentinhaber: Voss Automotive GmbH, 51688 Wipperfürth (DE)
(72) Erfinder: Heinrichs, Eugen, 51702 Bergneustadt (DE); Röhrig, Lukas, 51709 Marienheide (DE); Birkholz, Thomas, 51645 Gummersbach (DE); Schwarzkopf, Otfried, 51515 Kürten (DE)
(74) Vertreter: Patent- und Rechtsanwälte Dr. Solf & Zapf

(56) Entgegenhaltungen:
- DE-A1-102013 103 534
- DE-U1-202007 010 502
- DE-U1-202011 051 325
- DE-U1-202017 101 274

## Beschreibung

Die Erfindung betrifft eine SCR-Verbindungsstelle, aufweisend einen Verbinderkörper, mindestens zwei Fluidleitungen und ein den Verbinderkörper und die dem Verbinderkörper zugewandten Endbereiche der Fluidleitungen umschließendes Gehäuse, wobei der Verbinderkörper mindestens zwei Fluidleitungen miteinander verbindet und mit den verbundenen Fluidleitungen in das Gehäuse einsetzbar ist, wobei mindestens eine Fluidleitung über eine Anschlussstelle des Verbinderkörpers in einer Einführrichtung in die Anschlussstelle eingeführt und im nicht in dem Gehäuse eingesetzten Zustand lösbar mit dem Verbinderkörper verbunden ist, wobei die lösbar verbundene Fluidleitung an ihrem Außenumfang ein Haltemittel aufweist, mittels dem die Fluidleitung in der Anschlussstelle unter Zusammenwirkung mit einem in dem Gehäuse in Einführrichtung der Fluidleitung vor der Anschlussstelle des Verbinderkörpers angeordneten Fixierelement im in dem Gehäuse eingesetzten Zustand gegen ein Lösen entgegen der Einführrichtung gesichert ist.

SCR-Verbindungsstellen der vorstehend beschriebenen Art sind aus der Praxis in unterschiedlichen Ausführungsformen bekannt. Bei Verbindern und Fluidleitungen für die Durchleitung von wässrigen Medien besteht das Problem, dass bei niedrigen Temperaturen das wässrige Medium unter Volumenausdehnung gefriert. Solche wässrigen Harnstofflösungen werden bekanntlich im Rahmen so genannter SCR-Verfahren (Selective Catalytic Reduction) in Kraftfahrzeugen verwendet, um den Stickstoffgehalt von Abgasen zu reduzieren. Aufgrund dieser Volumenausdehnung bzw. des damit einhergehenden Drucks können die Verbinder und/oder Fluidleitungen beschädigt oder sogar vollständig zerstört werden. Das gilt vor allem auch für Verbinder und Fluidleitungen, die zur Durchleitung von wässrigen Harnstofflösungen eingesetzt werden. Die wässrige Harnstofflösung gefriert bei niedrigen Temperaturen unter Volumenausdehnung, und durch entsprechende Druckerhöhung können Verbinder und Fluidleitungen des SCR-Systems beschädigt oder vollständig zerstört werden. Grundsätzlich ist es bekannt, solche Verbinder und/oder die angeschlossenen Fluidleitungen zu beheizen. Nichtsdestoweniger ist eine zusätzliche Abhilfe beim Auftreten eines Gefrierens der Lösungen erwünscht.

Bei bekannten SCR-Verbindungsstellen, wie es zum Beispiel in der DE 20 2017 101 274 U1 beschrieben ist, ist das Haltemittel über ein Federelement an einem in dem Gehäuse angeordnetes Fixierelement, das als Querwand in einem Schenkel des Gehäuses ausgebildet ist, abgestützt, wobei das Haltemittel gegen die Rückstellkraft des Federelementes in Richtung des Fixierelementes verschiebbar ist. Bei dieser bekannten SCR-Verbindungsstelle ist die Montage beziehungsweise Herstellung relativ kompliziert, da die verschiedenen Federelemente vor dem Einsetzen des Verbinderkörpers zusammen mit den Fluidleitungen in das Gehäuse jeweils auf die Fluidleitungen aufgesetzt und während des Einsetzens des Verbinderkörpers mit den eingesteckten Fluidleitungen unter Vorspannung gehalten werden müssen, so dass sie sich im montierten Zustand im Gehäuse am Fixierelement abstützen können. Zudem müssen die Heizleiter der Fluidleitungen jeweils durch eine mittige Öffnung durch das Fixierelement und am Federelement vorbei geführt werden. Außerdem sowohl die Fluidleitungen mit dem Halteelement gegenüber dem Verbinderkörper als auch der Verbinderkörper gegenüber dem Gehäuse in dem Gehäuse zwischen den Fixierelementen beziehungsweise den Federelementen verschiebbar. Dadurch können ungewünschte Vibrationen in der SCR-Verbindungsstelle auftreten.

Der Erfindung liegt die Aufgabe zugrunde, eine SCR-Verbindungsstelle der eingangs genannten Art zur Verfügung zu stellen, bei dem die vorstehend geschilderten Probleme und Nachteile effektiv vermieden werden können.

Die Aufgabe wird erfindungsgemäß durch die Merkmale des kennzeichnenden Teils des Anspruchs 1 gelöst. Dadurch, dass in dem Gehäuse mindestens ein Widerlager angeordnet ist, dass den Verbinderkörper im in dem Gehäuse eingesetzten Zustand gegen ein Verschieben zumindest in Richtung der Einführrichtung der Fluidleitung in dem Gehäuse fixiert, und das Fixierelement entgegen der Einführrichtung der Fluidleitung oder das Halteelement in Einführrichtung der Fluidleitung elastisch verformbar ausgebildet ist, und insbesondere dadurch, dass das Widerlager derart ausgebildet und/oder angeordnet ist, dass es den Verbinderkörper im in dem Gehäuse eingesetzten Zustand gegen ein Verkippen in dem Gehäuse fixiert, werden ungewünschte Bewegungen und potentielle Vibrationen des Verbinderkörpers vermieden.

Insbesondere ist zwischen dem Widerlager und dem Fixierelement eine spielfreie Passung, vorzugsweise eine Presspassung, zur Aufnahme des Verbinderkörpers und des Haltemittels beziehungsweise des Verbinderkörpers, des Haltemittels und des Toleranzausgleichselementes ausgebildet. Dies reduziert die benötigte Genauigkeit der Herstellungstoleranzen der einzelnen Teile der Passung und wirkt als Dämpfungsmittel zur Vermeidung von Vibrationen.

Besonders bevorzugt ist mindestens ein Heizleiter mindestens einer Fluidleitung zur Beheizung des Verbinderkörpers auf dem Außenumfang des Verbinderkörpers angeordnet ist. Insbesondere ist eine Fluidleitung fest mit dem Verbinderkörper stoffschlüssig verbunden ist. Dies ermöglicht eine besonders einfache Weiterführung des Heizleiters der Fluidleitung zum Verbinderkörper und eine einfache Beheizung des Verbinderkörpers.

Insbesondere sind an der Innenwandung des Gehäuses Führungskanäle zur Führung der Heizdrähte und/oder Aufnahmeräume zur Aufnahme von Verbindungsstellen, insbesondere Elektrokontaktsteckern, der Heizdrähte unterschiedlicher Fluidleitungen ausgebildet. Dies erleichtert die Herstellung der SCR-Verbindungsstelle und reduziert zusätzlich mögliche Vibrationen.

Weitere vorteilhafte Ausgestaltungen der Erfindung ergeben sich aus der folgenden Figurenbeschreibung und den abhängigen Unteransprüchen.

Es zeigen:
- Fig. 1: eine Skizze eines Längsschnitts einer ersten Ausführungsform einer erfindungsgemäßen SCR-Verbindungsstelle,
- Fig. 2: eine Skizze eines Längsschnitts einer zweiten Ausführungsform einer erfindungsgemäßen SCR-Verbindungsstelle,
- Fig. 3: eine Skizze eines Längsschnitts einer dritten Ausführungsform einer erfindungsgemäßen SCR-Verbindungsstelle,
- Fig. 4a: eine Skizze eines Ausschnitts einer nicht erfindungsgemäßen Ausführung mit Toleranzausgleichselement im Bereich einer Anschlussstelle einer erfindungsgemäßen SCR-Verbindungsstelle,
- Fig. 4b: eine Skizze eines Ausschnitts einer nicht erfindungsgemäßen Ausführung mit Toleranzausgleichselement im Bereich einer alternativen Anschlussstelle einer erfindungsgemäßen SCR-Verbindungsstelle,
- Fig. 4c: eine Skizze eines Ausschnitts einer vorteilhaften Ausführung mit einem einteiligen Haltemittel mit Toleranzausgleich im Bereich einer Anschlussstelle einer erfindungsgemäßen SCR-Verbindungsstelle,
- Fig. 4d: eine Skizze eines Längsschnitts einer vierten Ausführungsform einer erfindungsgemäßen SCR-Verbindungsstelle,
- Fig. 5: eine Skizze eines Längsschnitts einer fünften Ausführungsform einer erfindungsgemäßen SCR-Verbindungsstelle mit einer stoffschlüssig verbundenen Fluidleitung,
- Fig. 6: eine Skizze eine beispielhaften Verlaufs der Heizdrähte bei einer erfindungsgemäßen SCR-Verbindungsstelle,
- Fig. 7: eine Skizze eines alternativen beispielhaften Verlaufs der Heizdrähte bei einer erfindungsgemäßen SCR-Verbindungsstelle.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

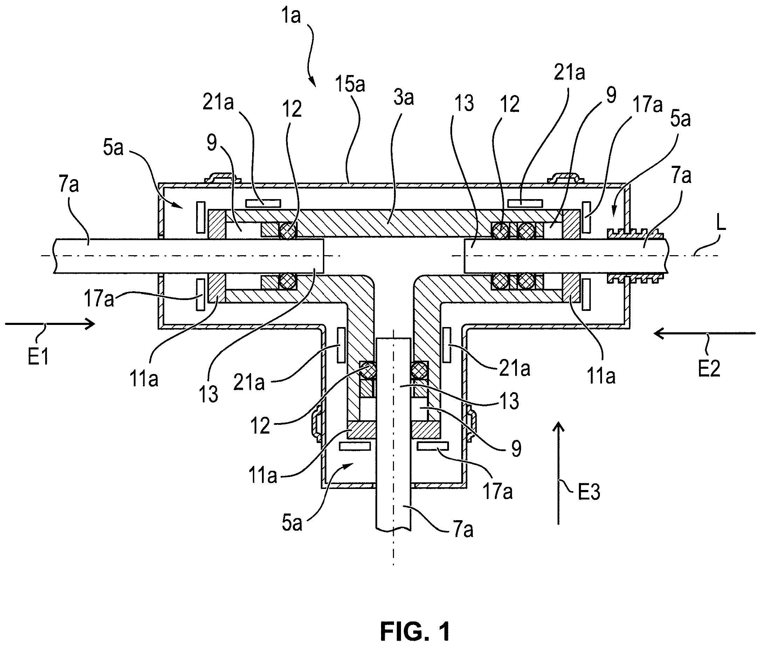

Figur 1 zeigt eine erste Ausführungsform einer erfindungsgemäßen SCR-Verbindungsstelle 1a. Die SCR-Verbindungsstelle 1a weist einen T-förmigen Verbinderkörper 3a auf, der an seinen drei freien Enden jeweils eine Anschlussstelle 5a zum Verbinden jeweils einer Fluidleitung 7a aufweist, wobei die Anschlussstellen 5a mittels eines durch den Verbinderkörper 3a laufenden Kanals fluidisch miteinander verbunden sind. Die Anschlussstellen 5a sind insbesondere als Muffen mit einer Einstecköffnung 9 zum Einstecken der jeweiligen Fluidleitung 7a ausgebildet, wobei sie am Innenumfang der Einstecköffnung 9 vorzugsweise Dichtmittel 12 aufweisen.

Die Fluidleitung 7a weist ein Rohr oder einen Schlauch auf, an dessen Endabschnitten ein am Außenumfang der Fluidleitung 7a angeordnetes Haltemittel 11a angeordnet ist. Das Haltemittel 11a ist insbesondere als ein ringförmiger Ansatz ausgebildet uns vorzugsweise stoffschlüssig, insbesondere mittels Laserschweißen, mit dem Rohr oder Schlauch verbunden. An das Haltemittel 11a schließt sich bis zum einzusteckenden freien Ende der Fluidleitung 7a ein Einsteckbereich 13 der Fluidleitung 7a an, der vorzugsweise durch das freie Ende des Schlauches oder Rohres gebildet ist. Die Fluidleitungen 7a sind mit ihrem Einsteckbereich 13 jeweils in die Anschlussstelle 5a des Verbinderkörpers 3a eingesteckt.

Zudem weist die SCR-Verbindungsstelle 1a ein den Verbinderkörper 3a und die Endabschnitte der Fluidleitungen 7a umhüllendes Gehäuse 15a auf. Das Gehäuse 15a ist vorzugsweise als ein zweiteiliges kappenförmiges Formteil ausgebildet, das vorzugsweise entlang einer Ebene parallel zur Längsachse L des Verbinderkörpers 3a geteilt ist. Bei der Montage werden vorzugsweise zunächst die Fluidleitungen 7a in den Verbinderkörper 3a eingesteckt und anschließend der Verbinderkörper 3a zusammen mit den eingesteckten Fluidleitungen 7a in eine erste Gehäusehälfte des Gehäuses 15a eingesetzt. Danach wird die erste Gehäusehälfte mit einer zweiten Gehäusehälfte des Gehäuses 15a verschlossen.

Zur Fixierung der Verbindung der Fluidleitungen 7a mit dem Verbinderkörper 3a sind in dem Gehäuse 15a Fixierelemente 17a ausgebildet. Die Fixierelemente 17a sind derart ausgebildet, dass sie eine Bewegung des Haltemittels 11a der Fluidleitung 7a entgegen der Einführrichtung E1, E2, E3 der jeweiligen Fluidleitung 7a begrenzen. Vorzugsweise sind die Fixierelemente 17a als ein in Einführrichtung E1, E2, E3 der jeweiligen Fluidleitung 7a vor der Einstecköffnung 9 des Verbinderkörpers 3a angeordnetes Anschlaglager ausgebildet. Das Fixierelement 17a ist von der Einstecköffnung 9 derart beabstandet, dass das Haltemittel 11a der jeweiligen Fluidleitung 7a zwischen dem Fixierelement 17a und einer Außenwand des Verbinderkörpers 3a in der jeweiligen Einführrichtung E1, E2, E3 und entgegen der jeweiligen Einführrichtung E1, E2, E3 fixiert ist. Insbesondere sind die Fixierelemente 17a als an der Innenwand des Gehäuses 15a angeformte Ansätze ausgebildet. Vorteilhafterweise ist das Fixierelement 17a entgegen der Einführrichtung E1, E2, E3 der Fluidleitung 7a elastisch verformbar ausgebildet. Dazu ist das Fixierelement 17a vorzugsweise aus einem elastischen Kunststoff, insbesondere aus einem thermoplastischen Elastomer ausgebildet. Vorteilhafterweise ist in dem Gehäuse 15a mindestens ein Widerlager 21a angeordnet, das den Verbinderkörper 3a gegen ein Verschieben in Richtung einer der Einführrichtungen E1, E2, E3 der jeweiligen Fluidleitungen 7a in dem Gehäuse 15a fixieren. Zudem können die Widerlager 21a auch derart ausgebildet sein, dass sie den Verbinderkörper 3a gegen ein Verkippen in dem Gehäuse 15a fixieren. Die Widerlager 21a nehmen die an dem Verbinderkörper 3a auftretenden Normalkräfte und Momente und verhindern eine Verschiebung oder Drehung des Verbinderkörpers 3a in dem Gehäuse 15a. Zwischen dem Widerlager 21a und dem Fixierelement 17a ist insbesondere eine spielfreie Passung, vorzugsweise eine Presspassung, zur Aufnahme des Verbinderkörpers 3a und des Haltemittels 11a ausgebildet.

Insbesondere ist das Widerlager 21a als ein an der Innenwand des Gehäuses 15a angeformter Ansatz ausgebildet, der an der Außenwandung des Verbinderkörpers 3a anliegt. Alternativ zum angeformten Ansatz ist in der Innenwand des Gehäuses 15a eine nicht dargestellte Fixiertasche geformt, die den Verbinderkörper 3a formschlüssig aufnimmt und in dem Gehäuse 15a fixiert.

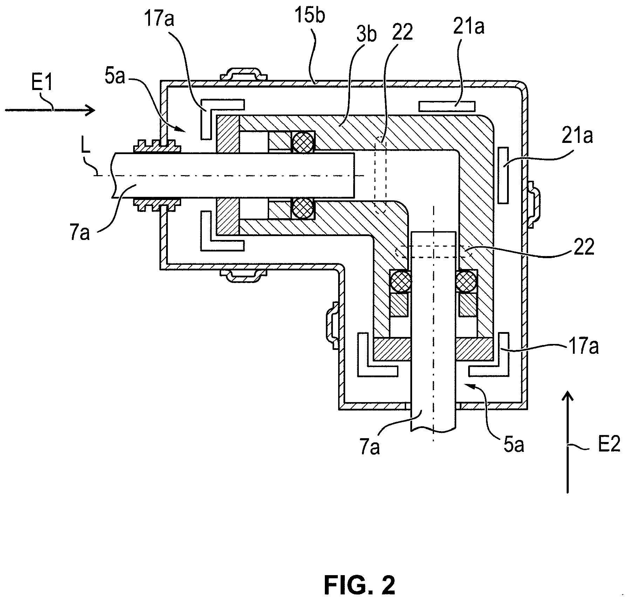

Figur 2 zeigt eine zweite Ausführungsform der SCR-Verbindungsstelle 1b. Die SCR-Verbindungsstelle 1b weist einen L-förmigen Verbinderkörper 3b auf, der an seinen drei freien Enden jeweils eine Anschlussstelle 5a gemäß der ersten Ausführungsform zum Verbinden jeweils einer Fluidleitung 7a gemäß der ersten Ausführungsform aufweist, wobei die Anschlussstellen 5a mittels eines durch den Verbinderkörper 3b laufenden Kanals fluidisch miteinander verbunden sind. Ansonsten entspricht die zweite Ausführungsform weitestgehend dem Aufbau der ersten Ausführungsform gemäß Figur 1, wobei bei der zweiten Ausführungsform gemäß Figur 2 am Außenumfang des Verbinderkörpers 3b oder am Innenumfang des Gehäuses 15b vorzugsweise Anlageelemente 22 angeordnet sind, die ein Verkippen des Verbinderkörpers 3b in dem Gehäuse 15b verhindern und/oder den Verbinderkörper 3b in dem Gehäuse 15b zwischen den beiden Gehäusehälften des Gehäuses 15b zentrieren.

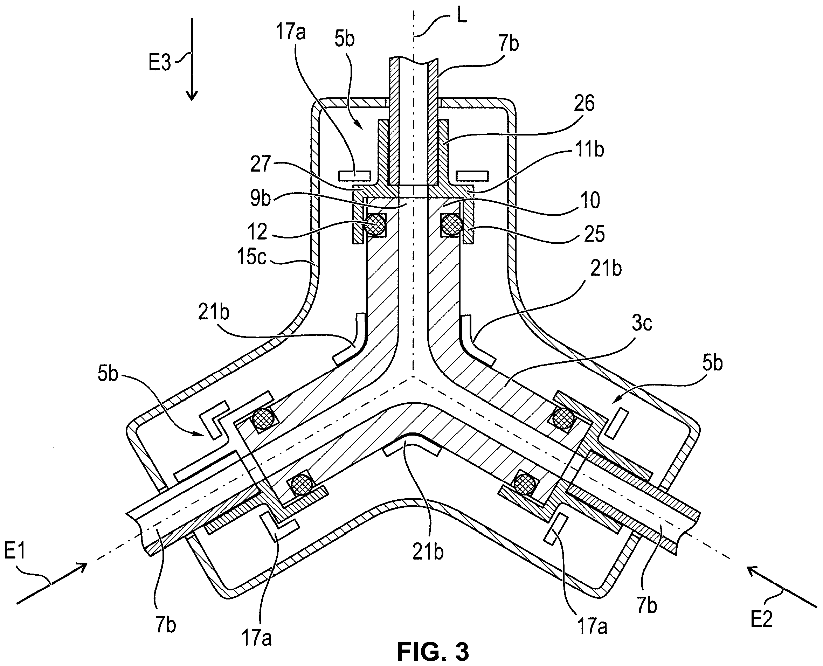

Figur 3 zeigt eine dritte Ausführungsform der SCR-Verbindungsstelle 1c. Die SCR-Verbindungsstelle 1c weist einen Y-förmigen Verbinderkörper 3c auf, der an seinen drei freien Enden jeweils eine Anschlussstelle 5b zum Verbinden jeweils einer Fluidleitung 7b aufweist, wobei die Anschlussstellen 5b mittels eines durch den Verbinderkörper 3c laufenden Kanals fluidisch miteinander verbunden sind. Die Anschlussstellen 5b sind insbesondere als Steckabschnitt mit einem Einsteckstutzen 10 zum Aufstecken der jeweiligen Fluidleitung 7b ausgebildet, wobei sie am Außenumfang des Einsteckstutzens 10 vorzugsweise Dichtmittel 12 aufweisen.

Die Fluidleitung 7b weist ein Rohr oder Schlauch auf, an dessen Endabschnitten ein am Außenumfang der Fluidleitung 7b angeordnetes Haltemittel 11b angeordnet ist. Das Haltemittel 11b ist insbesondere als eine auf dem freien Ende des Rohres oder des Schlauches aufgesetzte Verbindungsmuffe 25 ausgebildet, die in Richtung des Verbinderkörpers 3b eine Einstecköffnung 9b zur Aufnahme des Einsteckstutzens 10 des Verbinderkörpers 3c bildet und in Richtung der Fluidleitung 7b eine Aufnahmehülse 26 zur Aufnahme eines Schlauches oder Rohres aufweist. Vorzugsweise ist die Verbindungsmuffe 25 im Bereich der Aufnahmehülse 26 mit dem Schlauch oder Rohr stoffschlüssig verbunden und insbesondere lasergeschweißt. Dabei bildet die Verbindungsmuffe 25 an ihrem Außenumfang im Übergang von der Aufnahmehülse 26 zur Einstecköffnung 9b einen stufenförmigen Anschlag 27. Die Fluidleitungen 7b sind mit ihren Verbindungsmuffen 25 jeweils auf die Anschlussstelle 5b des Verbinderkörpers 3c aufgesteckt.

Die dritte Ausführungsform der SCR-Verbindungsstelle 1c weist ein den Verbinderkörper 3c und die Endabschnitte der Fluidleitungen 7b umhüllendes Gehäuse 15c auf. Das Gehäuse 15c entspricht funktional weitestgehend dem Gehäuse 15a der ersten oder 15b der zweiten Ausführungsform, ist jedoch an die unterschiedliche Y-Form der dritten Ausführungsform angepasst.

Zur Fixierung der Verbindung der Fluidleitungen 7b mit dem Verbinderkörper 3c sind in dem Gehäuse 15c entsprechend der ersten Ausführungsform Fixierelemente 17a ausgebildet. Die Fixierelemente 17a sind derart ausgebildet, dass sie eine Bewegung des Haltemittels 11b der Fluidleitung 7b entgegen der Einführrichtung E1, E2, E3 der jeweiligen Fluidleitung 7b begrenzen. Vorzugsweise sind die Fixierelemente 17a als ein in Einführrichtung E1, E2, E3 der jeweiligen Fluidleitung 7b vor dem Einsteckstutzen 10 des Verbinderkörpers 3c angeordnetes Anschlaglager ausgebildet. Das Fixierelement 17a ist von dem Einsteckstutzen 10 derart beabstandet, dass das Haltemittel 11b der jeweiligen Fluidleitung 7b zwischen dem Fixierelement 17a und einer Außenwand des Verbinderkörpers 3c in der jeweiligen Einführrichtung E1, E2, E3 und entgegen der jeweiligen Einführrichtung E1, E2, E3 fixiert ist.

Vorteilhafterweise sind in dem Gehäuse 15c mindestens ein, insbesondere zwei, vorzugsweise drei Widerlager 21b angeordnet, die den Verbinderkörper 3c gegen ein Verschieben in Richtung einer der Einführrichtungen E1, E2, E3 der jeweiligen Fluidleitungen 7b in dem Gehäuse 15c fixieren. Zudem können die Widerlager 21b auch derart ausgebildet sein, dass sie den Verbinderkörper 3c gegen ein Verkippen in dem Gehäuse 15c fixieren. Die Widerlager 21b nehmen die an dem Verbinderkörper 3c auftretenden Normalkräfte und Momente und verhindern eine Verschiebung oder Drehung des Verbinderkörpers 3c in dem Gehäuse 15c. Zwischen dem Widerlager 21a, 21b und dem Fixierelement 17a ist insbesondere eine spielfreie Passung, vorzugsweise eine Presspassung, zur Aufnahme des Verbinderkörpers 3c und des Haltemittels 11a, 11b ausgebildet.

Insbesondere ist das Widerlager 21b als ein an der Innenwand des Gehäuses 15c angeformter Ansatz ausgebildet, der an der Außenwandung des Verbinderkörpers 3c anliegt. Alternativ zum angeformten Ansatz ist in der Innenwand des Gehäuses 15c eine nicht dargestellte Fixiertasche geformt, die den Verbinderkörper 3c formschlüssig aufnimmt und in dem Gehäuse 15c fixiert. Zudem können auch, wie bei der zweiten Ausführungsform gemäß Figur 2, angeformte Anlageelemente 22 vorteilhafterweise vorhanden sein.

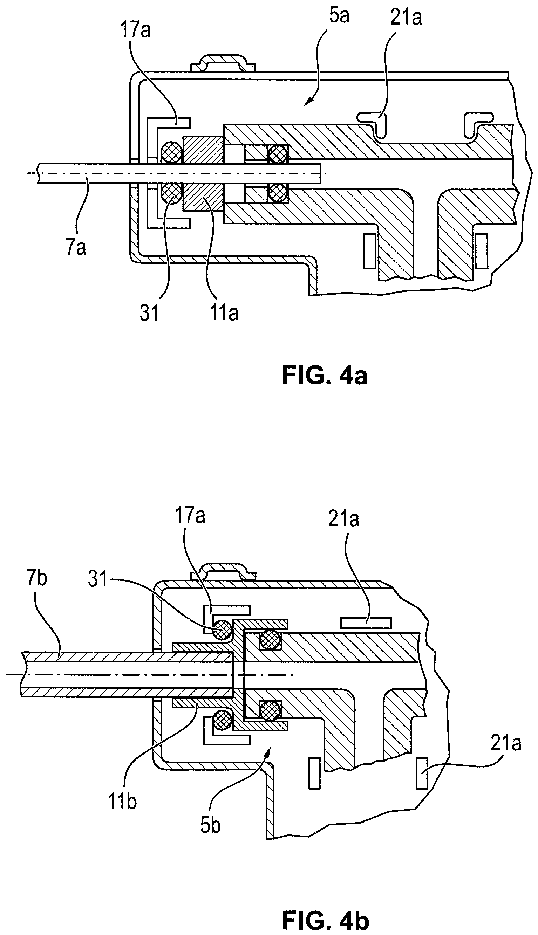

Figur 4a und 4b zeigen eine nicht erfindungsgemäße Ausführung für die Fixierung der Fluidleitungen 7a, 7b an den Anschlussstellen 5a, 5b der Verbinderkörper 3a, 3b, 3c. Auf der Fluidleitung 7a, 7b ist ein elastisch verformbares Toleranzausgleichselement 31 zwischen den Haltemitteln 11a, 11b der Fluidleitung 7a, 7b und den Fixierelementen 17a des Gehäuses 15a, 15b, 15c angeordnet. Bei dieser Ausführungsform sind die Fixierelemente 17a vorzugsweise starr ausgebildet. Das Toleranzausgleichselement 31 ist insbesondere als O-Ring aus einem thermoplastischen Elastomer ausgebildet. Bei der Konfektionierung der Fluidleitung wird dazu das Toleranzausgleichselement 31 auf das Rohr oder den Schlauch geschoben, bevor das Haltemittel 11a, 11b auf dem Rohr oder dem Schlauch befestigt wird. Vorzugsweise ist das Toleranzausgleichselement 31 derart ausgebildet, dass es auf der Fluidleitung 7a, 7b positionsstabil angeordnet ist, so dass es sich beim Einstecken der Fluidleitung 7a, 7b in die Anschlussstellen 5a, 5b nicht verschiebt. Zwischen dem Widerlager 21a, 21b und dem Fixierelement 17a ist insbesondere eine spielfreie Passung, vorzugsweise eine Presspassung, zur Aufnahme des Verbinderkörpers 3a, 3b, 3c, des Toleranzausgleichselementes 31 und des Haltemittels 11a, 11b ausgebildet.

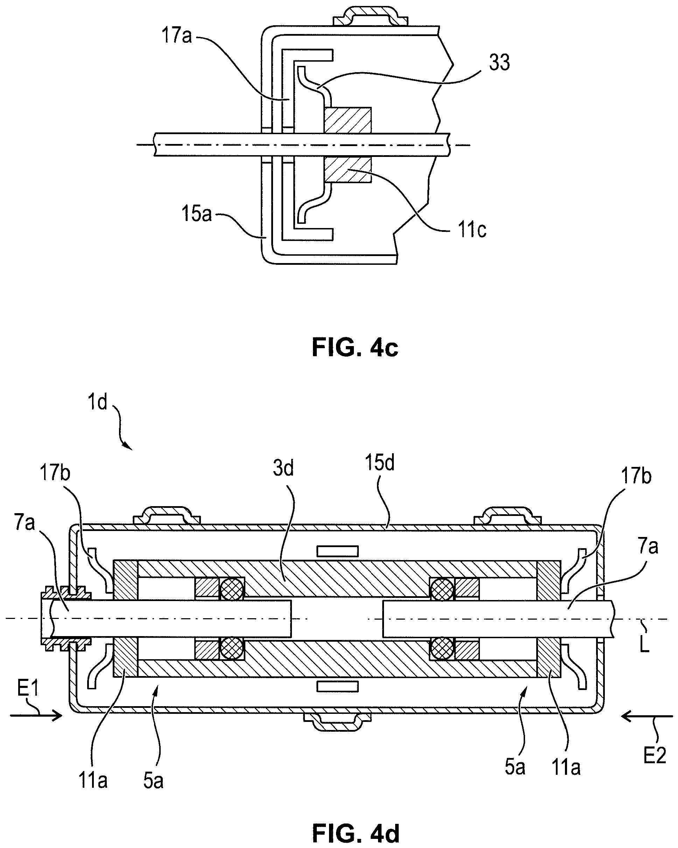

Gemäß Figur 4c kann alternativ zu einem separaten Toleranzausgleichselement 31 das Toleranzausgleichselement 31 erfindungsgemäß auch einteilig mit den Haltemitteln 11c gebildet werden. Dazu wird das Haltemittel 11c insbesondere als Zwei-Komponenten-Teil ausgebildet, wobei an der dem Fixierelement 17a zugewandten Stirnseite des Haltemittels 11c die den Toleranzausgleich gebende Funktion aus einer thermoplastischen Elastomer-Komponente 33 ausgebildet ist. Alternativ oder ergänzend kann das Halteelement 11c als ein in der Einführrichtung E1, E2, E3 verformbares Formelement mit einer einen elastischen Effekt gebenden Formgebung, wie zum Beispiel ein S-Schlag oder Z-Schlag im Querschnitt, ausgebildet sein.

Vorzugsweise kann das starr ausgebildete Fixierelement 17a direkt durch die Innenwandung des Gehäuses 15a gebildet sein (Ausführung nicht dargestellt), so dass sich das Haltemittel 11c unmittelbar zwischen Innenwandung des Gehäuses 15a und Verbinderkörper 3a angeordnet ist.

Figur 4d zeigt eine vierte Ausführungsform einer erfindungsgemäßen SCR-Verbindungsstelle 1d. Die SCR-Verbindungsstelle 1d weist einen zylinderförmigen Verbinderkörper 3d auf, der an seinen zwei freien Enden jeweils eine Anschlussstelle 5a gemäß der ersten oder zweiten Ausführungsform zum Verbinden jeweils einer Fluidleitung 7a gemäß der ersten oder zweiten Ausführungsform aufweist, wobei die Anschlussstellen 5a mittels eines durch den Verbinderkörper 3d laufenden Kanals fluidisch miteinander verbunden sind.

Zudem weist die SCR-Verbindungsstelle 1d ein den Verbinderkörper 3d und die Endabschnitte der Fluidleitungen 7a umhüllendes Gehäuse 15d auf. Das Gehäuse 15d ist vorzugsweise als ein zweiteiliges kappenförmiges Formteil ausgebildet, das vorzugsweise entlang einer Ebene parallel zur Längsachse L des Verbinderkörpers 3d geteilt ist.

Zudem zeigt Figur 4d eine weitere alternative vorteilhafte Ausführung zu einem separaten Toleranzausgleichselement 31. Dabei wird die den Toleranzausgleich gebende Funktion einteilig mittels eines elastisch verformbaren Fixierelementes 17b erreicht. Dazu kann das Fixierelement 17b als ein entgegen der Einführrichtung E1, E2 verformbares Formelement mit einer einen elastischen Effekt gebenden Formgebung, wie zum Beispiel ein S-Schlag oder Z-Schlag im Querschnitt, oder einer elastischen Materialauswahl, wie zum Beispiel einem thermoplastischen Elastomer, ausgebildet sein. Zwischen dem Widerlager 21a, 21b und dem Fixierelement 17b ist insbesondere eine spielfreie Passung, vorzugsweise eine Presspassung, zur Aufnahme des Verbinderkörpers 3a, 3b, 3c, 3d und des Haltemittels 11a, 11b ausgebildet.

Grundsätzlich können die Merkmale der verschiedenen Ausführungsformen auch miteinander kombiniert werden. So ist die Formgebung der SCR-Verbindungsstelle 1a, 1b, 1c, 1d als Y-, T-, Eck-, oder Zylinderteil grundsätzlich unabhängig von der Art der Anschlussstellen 5a, 5b, der Art der Fluidleitungen 7a, 7b und damit der Haltemittel 11a, 11b oder der Art der Fixierelemente 17a, 17b. Auch ist es grundsätzlich denkbar, dass nicht alle angeschlossenen Fluidleitungen 7a, 7b mit Anschlussstellen 5a, 5b einer SCR-Verbindungsstelle 1a, 1b, 1c, 1d verbunden werden und/oder mit Fixierelementen 17a, 17b fixiert werden.

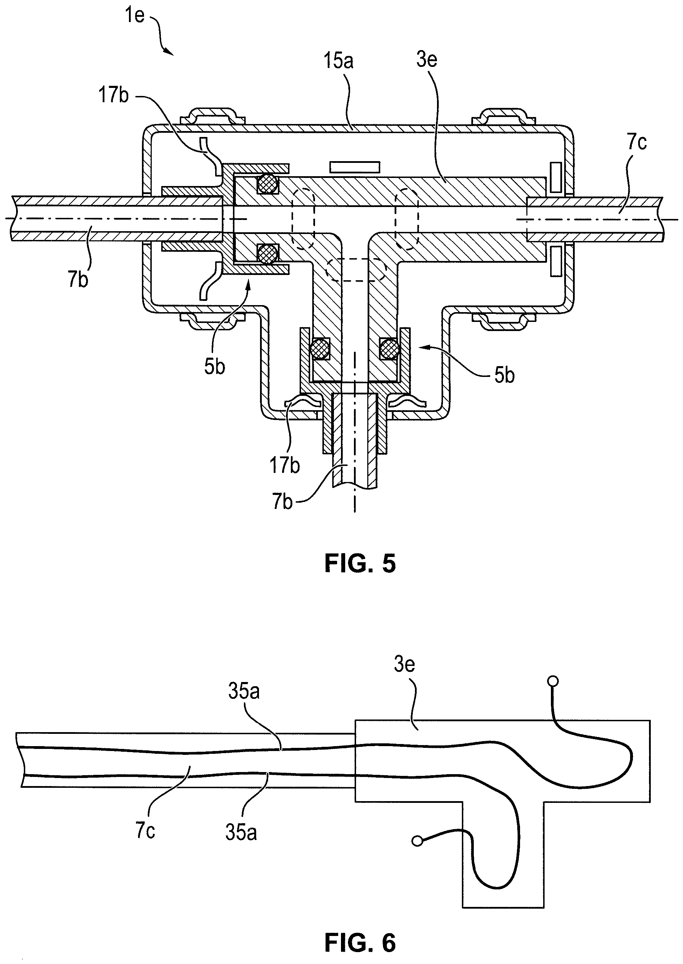

Figur 5 zeigt eine weitere vorteilhafte Ausführungsform einer SCR-Verbindungstelle 1e. Die SCR-Verbindungstelle 1e ist ähnlich zur ersten Ausführungsform als T-förmige SCR-Verbindungsstelle 1e mit drei angeschlossenen Fluidleitungen ausgebildet. Davon sind zwei Anschlussstellen 5b des Verbinderkörpers 3e gemäß der zweiten Ausführungsform mit Fluidleitungen 7b gemäß der zweiten Ausführungsform ausgebildet, wobei die Fixierelemente 17b für die beiden Fluidleitungen 7b gemäß der Ausführung in Figur 4d ausgebildet sind. Vorteilhafterweise ist die dritte Fluidleitung 7c ohne Halteelement 11a, 11b ausgebildet und wird lediglich unmittelbar in einer Einstecköffnung mit dem Verbinderkörper 3e stoffschlüssig verbunden. Insofern kann der Verbinderkörper 3e bereits mit einer Fluidleitung 7c vorkonfektioniert ausgebildet sein.

Die Fluidleitungen 7a, 7b, 7c der oben beschrieben Ausführungsformen der SCR-Verbindungsstellen 1a, 1b, 1c, 1d, 1e weisen jeweils insbesondere zwei Heizleiter 35a, 35b, 35c auf.

Figur 6 zeigt eine Skizze der Verwendung der Heizleiter 35a zur Beheizung eines Verbinderkörpers 3e. Dabei ist es besonders vorteilhaft, wenn mindestens ein Heizleiter 35a mindestens einer Fluidleitung 7c zur Beheizung des Verbinderkörpers 3e auf dem Außenumfang des Verbinderkörpers 3e angeordnet ist. Insbesondere sind wie in Figur 6 gezeigt beide Heizleiter 35a einer Fluidleitung 7c zur Beheizung des Verbinderkörpers 3e auf dem Außenumfang des Verbinderkörpers 3e zur Beheizung angeordnet.

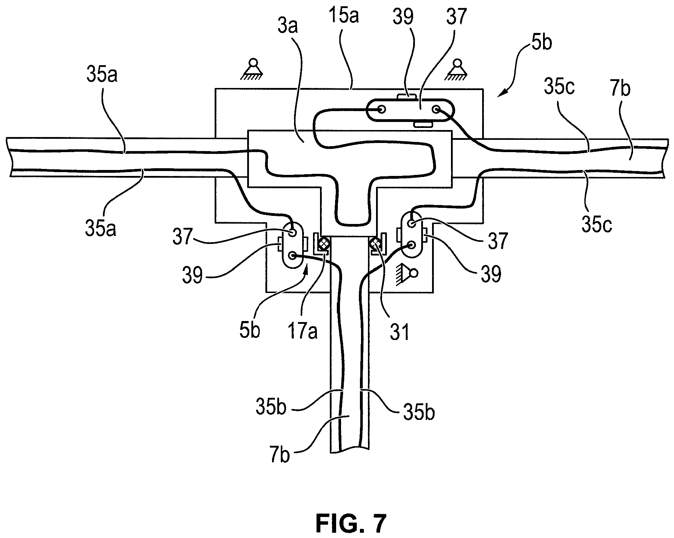

Figur 7 zeigt eine Skizze einer SCR-Verbindungsstelle 1e gemäß Figur 5, wobei die linke Fluidleitung 7c fest mit dem Verbinderkörper 3e stoffschlüssig verbunden ist, und wobei Fixierelemente 17a und Toleranzausgleichselemente 31 gemäß der Figur 4b angeordnet sind. Dabei ist es besonders vorteilhaft, wenn nur die Heizleitungen 35a der fest verbundenen Fluidleitung 7c zur Beheizung des Verbinderkörpers 3e am Außenumfang des Verbinderkörpers 3e angeordnet sind beziehungsweise der Außenumfang des Verbinderkörpers 3e von diesen Heizleitungen 35a umwickelt ist. Vorzugsweise werden die Heizleiter 35b, 35c der in die Anschlussstellen 5b gesteckten Fluidleitungen 7b in Einführrichtung E1, E2, E3 vor den Fixierelementen 17a seitlich an den Fixierelementen 17a zwischen der Innenwand des Gehäuses 15a und dem Verbinderkörper 3e vorbeigeführt, wobei ein Heizleiter 35a der fest verbundenen Fluidleitung 7c elektrisch mit einem Heizleiter 35b der einen gesteckten Fluidleitung 7b elektrisch verbunden ist, und der andere Heizleiter 35b der einen gesteckten Fluidleitung 7b elektrisch mit einem Heizleiter 35c der anderen gesteckten Fluidleitung 7b verbunden ist, und der andere Heizleiter 35c der anderen gesteckten Fluidleitung 7b mit dem anderen um den Verbinderkörper 3e angeordneten Heizleiter 35a der fest verbundenen Fluidleitung 7c elektrisch verbunden ist.

Dies ermöglicht ein einfacheres Umwickeln, da hier keine Fixierelemente 17b oder Toleranzausgleichselemente 31 beim Führen der Heizdrähte 35a, 35b, 35c im Weg stehen. Zudem können die Heizdrähte 35a schon vor dem Einsetzen in das Gehäuse 15a an dem mit einer Fluidleitung 7c vorkonfektionierten Verbinderkörper 3e angeordnet beziehungsweise umwickelt werden. In einer weiter vorteilhaften Gestaltung wird nur genau ein Heizleiter 35a der fest stoffschlüssig verbundenen Fluidleitung 7c zur Beheizung des Fluidkörpers 3e verwendet.

Die beschriebene Anordnung und Verschaltung der Heizleiter 35a, 35b, 35c ist vom Prinzip unabhängig von den verschiedenen Ausführungsformen und kann bei allen beschriebenen Ausführungsformen, angepasst an die Anzahl der verwendeten Fluidleitungen 7a, 7b, 7c, verwendet werden.

In einer weiteren vorteilhaften Ausgestaltung sind an der Innenwandung des Gehäuses 15a, 15b, 15c, 15d Führungskanäle zur Führung der Heizdrähte 35a, 35b, 35c und/oder Lagerstellen 39 und/oder Aufnahmeräume zur Aufnahme von Verbindungsstellen 37, wie zum Beispiel Crimpstellen oder zusammengesteckte Elektrokontaktstecker der Heizdrähte 35a, 35b, 35c, ausgebildet. Die Führungskanäle, Lagerstellen 39 oder Aufnahmeräume ermöglichen eine einfachere Montage und verhindern ein Verrutschen der Heizdrähte 35a, 35b, 35c und der Verbindungsstellen 37.

Vorzugsweise werden die Heizdrähte 35a, 35b, 35c mittels Elektrokontaktstecker miteinander verbunden, die an Ihrem Außenumfang bezogen auf ihre Fügerichtung Vorsprünge beziehungsweise Durchmessersprünge aufweisen (nicht dargestellt). Dabei ist der Aufnahmeraum an der Innenwand des Gehäuses 35a, 35b, 35c derart ausgebildet, dass ein Paar zusammengesetzte Elektrokontaktstecker formschlüssig in dem Aufnahmeraum eingepasst sind, so dass die Elektrokontaktstecker positionsstabil in dem Gehäuse 15a, 15b, 15c gelagert sind und ein Lösen der Elektrokontaktstecker verhindert wird. Dies ermöglicht ein einfaches Einsetzen der Verbindungsstellen 37 der Heizdrähte 35a, 35b, 35c in die Gehäusehälfte zusammen mit dem Verbinderkörper 3a, 3b, 3c, 3d und den Fluidleitungen 7a, 7b, 7c.

Die Fixierelemente 17a und die Widerlager 21a sind in den Figuren von ihren benachbarten Elementen, dem Halteansatz 11 der Fluidleitung 7a beziehungsweise dem Verbinderkörper 3a beabstandet dargestellt, obwohl diese als Übergangspassung oder Presspassung angeordnet sind. Dies ist lediglich in der handschriftlichen Zeichnung so dargestellt, soll aber kein zwangsläufiges Spiel zwischen den Fixierelementen 17a und dem Halteansatz 11 oder dem Verbinderkörper 3a und zwischen dem Widerlager 21a und dem Verbinderkörper 3a bedeuten.

### Bezugszeichenliste

- 1a, 1b, 1c, 1d, 1e: SCR-Verbindungsstelle
- 3a, 3b, 3c, 3d, 3e: Verbinderkörper
- 5a, 5b: Anschlussstelle
- 7a, 7b, 7c: Fluidleitung
- 9: Einstecköffnung
- 10: Einsteckstutzen
- 11a, 11b, 11c: Haltemittel
- 12: Dichtmittel
- 13: Einsteckbereich
- 15a, 15b, 15c, 15d: Gehäuse
- 17a, 17b, 17c: Fixierelement
- 21a, 21b: Widerlager
- 22: Anlageelemente
- 25: Verbindungsmuffe
- 26: Aufnahmehülse
- 31: Toleranzausgleichelement
- 33: Elastisch verformbare Komponente
- 35a, 35b, 35c: Heizleiter
- 37: Verbindungsstellen
- 39: Lagerstellen

- E1, E2, E3: Einführrichtung
- L: Längsachse

## Patentansprüche

1. SCR-Verbindungsstelle (1a, 1b, 1c, 1d, 1e), aufweisend einen Verbinderkörper (3a, 3b, 3c, 3d, 3e), mindestens zwei Fluidleitungen (7a, 7b, 7c) und ein den Verbinderkörper (3a, 3b, 3c, 3d, 3e) und die dem Verbinderkörper (3a, 3b, 3c, 3d, 3e) zugewandten Endbereiche der Fluidleitungen (7a, 7b, 7c) umschließendes Gehäuse (15a, 15b, 15c, 15d), wobei der Verbinderkörper (3a, 3b, 3c, 3d, 3e) mindestens zwei Fluidleitungen (7a, 7b, 7c) miteinander verbindet und mit den verbundenen Fluidleitungen (7a, 7b, 7c) in das Gehäuse (15a, 15b, 15c, 15d) einsetzbar ist, wobei mindestens eine Fluidleitung (7a, 7b) über eine Anschlussstelle (5a, 5b) des Verbinderkörpers (3a, 3b, 3c, 3d, 3e) in einer Einführrichtung (E1, E2, E3) in die Anschlussstelle (5a, 5b) eingeführt und im nicht in dem Gehäuse (15a, 15b, 15c, 15d) eingesetzten Zustand lösbar mit dem Verbinderkörper (3a, 3b, 3c, 3d, 3e) verbunden ist, wobei die lösbar verbundene Fluidleitung (7a, 7b) an ihrem Außenumfang ein Haltemittel (11a, 11b) aufweist, mittels dem die Fluidleitung (7a, 7b) in der Anschlussstelle (5a, 5b) unter Zusammenwirkung mit einem in dem Gehäuse (15a, 15b, 15c, 15d) in Einführrichtung (E1, E2, E3) der Fluidleitung (7a, 7b) vor der Anschlussstelle (5a, 5b) des Verbinderkörpers (3a, 3b, 3c, 3d, 3e) angeordneten Fixierelement (17a, 17b, 17c) im in dem Gehäuse (15a, 15b, 15c, 15d) eingesetzten Zustand gegen ein Lösen entgegen der Einführrichtung (E1, E2, E3) gesichert ist,
**dadurch gekennzeichnet, dass**
in dem Gehäuse mindestens ein Widerlager (21a, 21b) angeordnet ist, das den Verbinderkörper (3a, 3b, 3c, 3d, 3e) im in dem Gehäuse eingesetzten Zustand gegen ein Verschieben zumindest in Richtung der Einführrichtung (E1, E2, E3) der Fluidleitung (7a, 7b, 7c) in dem Gehäuse (15a, 15b, 15c, 15d) fixiert, und das Fixierelement (17a, 17b, 17c) entgegen der Einführrichtung (E1, E2, E3) der Fluidleitung (7a, 7b, 7c) oder das Haltemittel (11a, 11b, 11c) in Einführrichtung der Fluidleitung (7a, 7b, 7c) elastisch verformbar ausgebildet ist.

2. SCR-Verbindungsstelle (1a, 1b, 1c, 1d, 1e) nach Anspruch 1,
**dadurch gekennzeichnet, dass**
das Widerlager (21a, 21b) derart ausgebildet und/oder angeordnet ist, dass es den Verbinderkörper (3a, 3b, 3c, 3d, 3e) im in dem Gehäuse (15a, 15b, 15c, 15d) eingesetzten Zustand gegen ein Verkippen in dem Gehäuse (15a, 15b, 15c, 15d) fixiert.

3. SCR-Verbindungsstelle (1a, 1b, 1c, 1d, 1e) nach Anspruch 1 oder 2,
**dadurch gekennzeichnet, dass**
am Außenumfang des Verbinderkörpers (3a, 3b, 3c, 3d, 3e) oder am Innenumfang des Gehäuses (15a, 15b, 15c, 15d) Anlageelemente (22) angeordnet sind, die ein Verkippen des Verbinderkörpers (3a, 3b, 3c, 3d, 3e) in dem Gehäuse (15a, 15b, 15c, 15d) verhindern.

4. SCR-Verbindungsstelle (1a, 1b, 1c, 1d, 1e) nach einem der Ansprüche 1 bis 3,
**dadurch gekennzeichnet, dass**
das Haltemittel (11a, 11b, 11c) als ein Zwei-Komponenten-Teil ausgebildet ist und eine elastisch verformbare Komponente (33) einteilig mit dem Haltemittel (11a, 11b, 11c) auf der dem Fixierelement (17a, 17b, 17c) gegenüberliegenden Seite des Haltemittels (11a, 11b, 11c) ausgebildet ist.

5. SCR-Verbindungsstelle (1a, 1b, 1c, 1d, 1e) nach einem der Ansprüche 1 bis 3,
**dadurch gekennzeichnet, dass**
das Haltemittel (11a, 11b, 11c) als ein in der Einführrichtung (E1, E2, E3) verformbares Formelement mit einer einen elastischen Effekt gebenden Formgebung ausgebildet ist.

6. SCR-Verbindungsstelle (1a, 1b, 1c, 1d, 1e) nach einem der Ansprüche 1 bis 5,
**dadurch gekennzeichnet, dass**
zwischen dem Widerlager (21a, 21b) und dem Fixierelement (17a, 17b, 17c) eine spielfreie Passung, vorzugsweise eine Presspassung, zur Aufnahme des Verbinderkörpers (3a, 3b, 3c, 3d, 3e) und des Haltemittels (11a, 11b) ausgebildet ist.

7. SCR-Verbindungsstelle (1a, 1b, 1c, 1d, 1e) nach einem der Ansprüche 1 bis 6,
**dadurch gekennzeichnet, dass**
mindestens ein Heizleiter (35a, 35b, 35c) mindestens einer Fluidleitung (7a, 7b, 7c) zur Beheizung des Verbinderkörpers (3a, 3b, 3c, 3d, 3e) auf dem Außenumfang des Verbinderkörpers (3a, 3b, 3c, 3d, 3e) angeordnet ist.

8. SCR-Verbindungsstelle (1a, 1b, 1c, 1d, 1e) nach einem der Ansprüche 1 bis 7,
**dadurch gekennzeichnet, dass**
eine Fluidleitung (7a, 7b, 7c) fest mit dem Verbinderkörper (3a, 3b, 3c, 3d, 3e) stoffschlüssig verbunden ist.

9. SCR-Verbindungsstelle (1a, 1b, 1c, 1d, 1e) nach Anspruch 8,
**dadurch gekennzeichnet, dass**
nur die Heizleitungen (35a, 35b, 35c) der fest verbundenen Fluidleitung (7a, 7b, 7c) zur Beheizung des Verbinderkörpers (3a, 3b, 3c, 3d, 3e) am Außenumfang des Verbinderkörpers (3a, 3b, 3c, 3d, 3e) angeordnet sind.

10. SCR-Verbindungsstelle (1a, 1b, 1c, 1d, 1e) nach einem der Ansprüche 7 bis 9,
**dadurch gekennzeichnet, dass**
die Heizleiter (35a, 35b, 35c) der in die Anschlussstellen (5a, 5b) gesteckten Fluidleitungen (7a, 7b, 7c) in Einführrichtung (E1, E2, E3) vor den Fixierelementen (17a, 17b, 17c) seitlich an den Fixierelementen (17a, 17b, 17c) zwischen der Innenwand des Gehäuses (15a, 15b, 15c, 15d) und dem Verbinderkörper (3a, 3b, 3c, 3d, 3e) vorbeigeführt sind.

11. SCR-Verbindungsstelle (1a, 1b, 1c, 1d, 1e) nach einem der Ansprüche 1 bis 10,
**dadurch gekennzeichnet, dass**
an der Innenwandung des Gehäuses (15a, 15b, 15c, 15d) Führungskanäle zur Führung der Heizdrähte (35a, 35b, 35c) und/oder Lagerstellen (39) und/oder Aufnahmeräume zur Aufnahme von Verbindungsstellen (37) der Heizdrähte (35a, 35b, 35c) ausgebildet sind.

12. SCR-Verbindungsstelle (1a, 1b, 1c, 1d, 1e) nach Anspruch 11,
**dadurch gekennzeichnet, dass**
der Aufnahmeraum zur Aufnahme von Verbindungsstellen (37) der Heizdrähte (35a, 35b, 35c) an der Innenwand des Gehäuses (15a, 15b, 15c, 15d) derart ausgebildet ist, dass ein Paar zusammengesetzte Elektrokontaktstecker der Heizdrähte (35a, 35b, 35c) formschlüssig in dem Aufnahmeraum eingepasst ist.

## Claims

1. SCR connection point (1a, 1b, 1c, 1d, 1e), having a connector body (3a, 3b, 3c, 3d, 3e), at least two fluid lines (7a, 7b, 7c) and a housing (15a, 15b, 15c, 15d) which encloses the connector body (3a, 3b, 3c, 3d, 3e) and the end regions of the fluid lines (7a, 7b, 7c) that face the connector body (3a, 3b, 3c, 3d, 3e), wherein the connector body (3a, 3b, 3c, 3d, 3e) connects at least two fluid lines (7a, 7b, 7c) to one another and, with the connected fluid lines (7a, 7b, 7c), can be inserted into the housing (15a, 15b, 15c, 15d), wherein at least one fluid line (7a, 7b) is inserted into the connection point (5a, 5b) in an insertion direction (E1, E2, E3) via a connection point (5a, 5b) of the connector body (3a, 3b, 3c, 3d, 3e) and is releasably connected to the connector body (3a, 3b, 3c, 3d, 3e) in the state in which it is not inserted in the housing (15a, 15b, 15c, 15d), wherein the releasably connected fluid line (7a, 7b) has, on its outer circumference, a holding means (11a, 11b) by means of which the fluid line (7a, 7b) is secured against being released counter to the insertion direction (E1, E2, E3) in the connection point (5a, 5b) with interaction with a fixing element (17a, 17b, 17c), which is arranged in the housing (15a, 15b, 15c, 15d) in front of the connection point (5a, 5b) of the connector body (3a, 3b, 3c, 3d, 3e) in the insertion direction (E1, E2, E3) of the fluid line (7a, 7b), in the state in which it is inserted in the housing (15a, 15b, 15c, 15d),
**characterized in that**
at least one abutment (21a, 21b) is arranged in the housing, that fixes the connector body (3a, 3b, 3c, 3d, 3e) against being displaced at least in the direction of the insertion direction (E1, E2, E3) of the fluid line (7a, 7b, 7c) in the housing (15a, 15b, 15c, 15d) in the state in which it is inserted in the housing, and the fixing element (17a, 17b, 17c) is designed to be elastically deformable counter to the insertion direction (E1, E2, E3) of the fluid line (7a, 7b, 7c) or the holding means (11a, 11b, 11c) is designed to be elastically deformable in the insertion direction of the fluid line (7a, 7b, 7c).

2. SCR connection point (1a, 1b, 1c, 1d, 1e) according to Claim 1,
**characterized in that**
the abutment (21a, 21b) is designed and/or arranged in such a way that it fixes the connector body (3a, 3b, 3c, 3d, 3e) against tilting in the housing (15a, 15b, 15c, 15d) in the state in which it is inserted in the housing (15a, 15b, 15c, 15d).

3. SCR connection point (1a, 1b, 1c, 1d, 1e) according to Claim 1 or 2,
**characterized in that**
support elements (22) are arranged on the outer circumference of the connector body (3a, 3b, 3c, 3d, 3e) or on the inner circumference of the housing (15a, 15b, 15c, 15d), which support elements prevent tilting of the connector body (3a, 3b, 3c, 3d, 3e) in the housing (15a, 15b, 15c, 15d).

4. SCR connection point (1a, 1b, 1c, 1d, 1e) according to one of Claims 1 to 3,
**characterized in that**
the holding means (11a, 11b, 11c) is designed as a two-component part and an elastically deformable component (33) is formed in one piece with the holding means (11a, 11b, 11c) on that side of the holding means (11a, 11b, 11c) that is opposite the fixing element (17a, 17b, 17c).

5. SCR connection point (1a, 1b, 1c, 1d, 1e) according to one of Claims 1 to 3, **characterized in that** the holding means (11a, 11b, 11c) is designed as a shaped element which can be deformed in the insertion direction (E1, E2, E3) and has a shaping which provides an elastic effect.

6. SCR connection point (1a, 1b, 1c, 1d, 1e) according to one of Claims 1 to 5,
**characterized in that**
a play-free fit, preferably a press-fit, for receiving the connector body (3a, 3b, 3c, 3d, 3e) and the holding means (11a, 11b) is formed between the abutment (21a, 21b) and the fixing element (17a, 17b, 17c).

7. SCR connection point (1a, 1b, 1c, 1d, 1e) according to one of Claims 1 to 6,
**characterized in that**
at least one heating conductor (35a, 35b, 35c) of at least one fluid line (7a, 7b, 7c) for heating the connector body (3a, 3b, 3c, 3d, 3e) is arranged on the outer circumference of the connector body (3a, 3b, 3c, 3d, 3e).

8. SCR connection point (1a, 1b, 1c, 1d, 1e) according to one of Claims 1 to 7,
**characterized in that**
a fluid line (7a, 7b, 7c) is fixedly cohesively connected to the connector body (3a, 3b, 3c, 3d, 3e).

9. SCR connection point (1a, 1b, 1c, 1d, 1e) according to Claim 8,
**characterized in that**
only the heating lines (35a, 35b, 35c) of the fixedly connected fluid line (7a, 7b, 7c) for heating the connector body (3a, 3b, 3c, 3d, 3e) are arranged on the outer circumference of the connector body (3a, 3b, 3c, 3d, 3e).

10. SCR connection point (1a, 1b, 1c, 1d, 1e) according to one of Claims 7 to 9,
**characterized in that**
the heating conductors (35a, 35b, 35c) of the fluid lines (7a, 7b, 7c) which are plugged into the connection points (5a, 5b) are guided laterally past the fixing elements (17a, 17b, 17c) between the inner wall of the housing (15a, 15b, 15c, 15d) and the connector body (3a, 3b, 3c, 3d, 3e) in front of the fixing elements (17a, 17b, 17c) in the insertion direction (E1, E2, E3).

11. SCR connection point (1a, 1b, 1c, 1d, 1e) according to one of Claims 1 to 10,
**characterized in that**
guide ducts for guiding the heating wires (35a, 35b, 35c) and/or bearing points (39) and/or receiving spaces for receiving connection points (37) of the heating wires (35a, 35b, 35c) are formed on the inner wall of the housing (15a, 15b, 15c, 15d).

12. SCR connection point (1a, 1b, 1c, 1d, 1e) according to Claim 11,
**characterized in that**
the receiving space for receiving connection points (37) of the heating wires (35a, 35b, 35c) is formed on the inner wall of the housing (15a, 15b, 15c, 15d) in such a way that a pair of combined electrical contact plugs of the heating wires (35a, 35b, 35c) is fitted in an interlocking manner in the receiving space.

## Revendications

1. Point de liaison de RCS (1a, 1b, 1c, 1d, 1e), comprenant un corps de connecteur (3a, 3b, 3c, 3d, 3e), au moins deux conduites de fluide (7a, 7b, 7c) et un boîtier (15a, 15b, 15c, 15d) qui entoure le corps de connecteur (3a, 3b, 3c, 3d, 3e) ainsi que les zones d'extrémité des conduites de fluide (7a, 7b, 7c) qui font face au corps de connecteur (3a, 3b, 3c, 3d, 3e), le corps de connecteur (3a, 3b, 3c, 3d, 3e) reliant l'une à l'autre au moins deux conduites de fluide (7a, 7b, 7c) et pouvant être inséré dans le boîtier (15a, 15b, 15c, 15d) avec les conduites de fluide (7a, 7b, 7c) reliées, au moins une conduite de fluide (7a, 7b) étant introduite dans un point de raccordement (5a, 5b) du corps de connecteur (3a, 3b, 3c, 3d, 3e) dans une direction d'introduction (E1, E2, E3) par le biais du point de raccordement (5a, 5b) et, dans l'état non relié au boîtier (15a, 15b, 15c, 15d), étant reliée de manière amovible au corps de connecteur (3a, 3b, 3c, 3d, 3e), la conduite de fluide (7a, 7b) reliée de manière amovible possédant sur son pourtour extérieur un moyen de maintien (11a, 11b) au moyen duquel la conduite de fluide (7a, 7b), dans l'état introduit dans le boîtier (15a, 15b, 15c, 15d), est bloquée dans le point de raccordement (5a, 5b) pour empêcher un détachement à l'opposé de la direction d'introduction (E1, E2, E3) par coopération avec un élément de calage (17a, 17b, 17c) disposé dans le boîtier (15a, 15b, 15c, 15d) dans la direction d'introduction (E1, E2, E3) de la conduite de fluide (7a, 7b) avant le point de raccordement (5a, 5b) du corps de connecteur (3a, 3b, 3c, 3d, 3e),
**caractérisé en ce que**
au moins un palier de butée (21a, 21b) est disposé dans le boîtier, lequel bloque le corps de connecteur (3a, 3b, 3c, 3d, 3e) dans l'état introduit dans le boîtier contre un coulissement au moins dans le sens de la direction d'introduction (E1, E2, E3) de la conduite de fluide (7a, 7b, 7c) dans le boîtier (15a, 15b, 15c, 15d), et l'élément de calage (17a, 17b, 17c) est réalisé déformable élastiquement à l'opposé de la direction d'introduction (E1, E2, E3) de la conduite de fluide (7a, 7b, 7c) ou le moyen de maintien (11a, 11b, 11c) est réalisé déformable élastiquement dans la direction d'introduction de la conduite de fluide (7a, 7b, 7c).

2. Point de liaison de RCS (1a, 1b, 1c, 1d, le) selon la revendication 1, **caractérisé en ce que** le palier de butée (21a, 21b) est configuré et/ou disposé de telle sorte qu'il bloque le corps de connecteur (3a, 3b, 3c, 3d, 3e) dans l'état introduit dans le boîtier (15a, 15b, 15c, 15d) contre un désalignement angulaire dans le boîtier (15a, 15b, 15c, 15d).

3. Point de liaison de RCS (1a, 1b, 1c, 1d, 1e) selon la revendication 1 ou 2, **caractérisé en ce que** des éléments d'appui (22) sont disposés sur le pourtour extérieur du corps de connecteur (3a, 3b, 3c, 3d, 3e) ou sur le pourtour intérieur du boîtier (15a, 15b, 15c, 15d), lesquels empêchent un désalignement angulaire du corps de connecteur (3a, 3b, 3c, 3d, 3e) dans le boîtier (15a, 15b, 15c, 15d).

4. Point de liaison de RCS (1a, 1b, 1c, 1d, 1e) selon l'une des revendications 1 à 3, **caractérisé en ce que** le moyen de maintien (11a, 11b, 11c) est réalisé sous la forme d'une pièce en deux composants et un composant (33) déformable élastiquement est réalisé d'un seul tenant avec le moyen de maintien (11a, 11b, 11c) sur le côté du moyen de maintien (11a, 11b, 11c) à l'opposé de l'élément de calage (17a, 17b, 17c).

5. Point de liaison de RCS (1a, 1b, 1c, 1d, 1e) selon l'une des revendications 1 à 3, **caractérisé en ce que** le moyen de maintien (11a, 11b, 11c) est réalisé sous la forme d'un élément façonné déformable dans la direction d'introduction (E1, E2, E3) ayant un façonnage qui confère un effet élastique.

6. Point de liaison de RCS (1a, 1b, 1c, 1d, 1e) selon l'une des revendications 1 à 5, **caractérisé en ce qu'**un ajustement, de préférence un ajustement serré destiné à accueillir le corps de connecteur (3a, 3b, 3c, 3d, 3e) et le moyen de maintien (11a, 11b) est formé entre le palier de butée (21a, 21b) et l'élément de calage (17a, 17b, 17c).

7. Point de liaison de RCS (1a, 1b, 1c, 1d, 1e) selon l'une des revendications 1 à 6, **caractérisé en ce qu'**au moins un conducteur chauffant (35a, 35b, 35c) d'au moins une conduite de fluide (7a, 7b, 7c) destiné à chauffer le corps de connecteur (3a, 3b, 3c, 3d, 3e) est disposé sur le pourtour extérieur du corps de connecteur (3a, 3b, 3c, 3d, 3e).

8. Point de liaison de RCS (1a, 1b, 1c, 1d, 1e) selon l'une des revendications 1 à 7, **caractérisé en ce qu'**une conduite de fluide (7a, 7b, 7c) est reliée à demeure au corps de connecteur (3a, 3b, 3c, 3d, 3e) par fusion de matières.

9. Point de liaison de RCS (1a, 1b, 1c, 1d, 1e) selon la revendication 8, **caractérisé en ce que** seules les lignes chauffantes (35a, 35b, 35c) de la conduite de fluide (7a, 7b, 7c) reliée à demeure sont disposées sur le pourtour extérieur du corps de connecteur (3a, 3b, 3c, 3d, 3e) pour chauffer le corps de connecteur (3a, 3b, 3c, 3d, 3e).

10. Point de liaison de RCS (1a, 1b, 1c, 1d, 1e) selon l'une des revendications 7 à 9, **caractérisé en ce que** les conducteurs chauffants (35a, 35b, 35c) des conduites de fluide (7a, 7b, 7c) insérées dans les points de raccordement (5a, 5b) sont acheminés latéralement contre les éléments de calage (17a, 17b, 17c) entre la paroi interne du boîtier (15a, 15b, 15c, 15d) et le corps de connecteur (3a, 3b, 3c, 3d, 3e), avant les éléments de calage (17a, 17b, 17c) dans la direction d'introduction (E1, E2, E3).

11. Point de liaison de RCS (1a, 1b, 1c, 1d, 1e) selon l'une des revendications 1 à 10, **caractérisé en ce que** des canaux de guidage servant au guidage des fils chauffants (35a, 35b, 35c) et/ou des points d'appui (39) et/ou des espaces d'accueil destinés à accueillir des points de liaison (37) des fils chauffants (35a, 35b, 35c) sont formés au niveau de la paroi interne du boîtier (15a, 15b, 15c, 15d).

12. Point de liaison de RCS (1a, 1b, 1c, 1d, 1e) selon la revendication 11, **caractérisé en ce que** l'espace d'accueil destiné à accueillir des points de liaison (37) des fils chauffants (35a, 35b, 35c) au niveau de la paroi interne du boîtier (15a, 15b, 15c, 15d) est configuré de telle sorte qu'une paire de fiches de contact électrique des fils chauffants (35a, 35b, 35c) est emboîtée par complémentarité de formes dans l'espace d'accueil.
